# EUROPEAN PATENT APPLICATION

(11) **EP 1 100 177 A1**
(43) Date of publication of application: **16.05.2001**
(21) Application number: 99870233.6
(22) Date of filing: 09.11.1999
(51) Int. Cl.: H02K 3/04, H02K 9/197, H02K 9/19

(54) **Stator for an electric motor or generator, and electric motor or generator provided with such stator**

(71) Applicant: ATLAS COPCO AIRPOWER N.V., 2610 Wilrijk (BE)
(72) Inventor: Nilson, Thord Agne Gustaf, S-135 54 Tyresö (SE)
(74) Representative: Donné, Eddy

(57) **Abstract**

The stator (2) comprises a core (8) and windings (9) in the form of thin discs surrounding the core wall, extending axially and radially and spaced apart from each other as well on the inside as on the outside of the core (8). The electric motor or generator comprises a rotor, a stator (2) of the above mentioned kind around the rotor (1) and a casing surrounding the stator (2).

## Description

The invention relates to a stator for an electric motor or generator, said stator comprising a tubular core and windings surrounding the core wall and thus traversed in their centre by the core, said windings extending axially and radially with respect to the axis of the core.

The continuous output power of an electric motor or generator is primarily limited by the cooling of the stator windings.

Stators of the above kind are known which comprises a number of windings extending axially and radially and wound around a tubular core. These windings are composed of a relatively thick bundle of conductors and the number of adjacent conductors increases towards the core as well from the outer side as from the inner side of the core.

At the inner side of the core, adjacent windings practically touch each other and the space between the rotor and the stator core is practically completely filled with windings except for a small ring-shaped air gap between the windings and the rotor.

This means that the part of the windings situated inside the stator core can only be cooled towards the core and said air-gap.

Because of the limited heat conduction in the core and additional losses in the core, it is normally only possible to evacuate a limited part of the heat via the core.

Most of the heat should be evacuated via the air gap, but it will be difficult to cool in this way the centre portion of the winding parts at the inside of the core.

The cooling of these windings is therefore limited.

The invention seeks to provide a stator having an improved cooling of the stator windings.

In accordance with the invention, this object is accomplished by the fact that as well on the inside as on the outside of the core the windings are for at least 95%, and preferably completely, spaced apart.

This means that, also on the inside of the core, the sides of the windings form cooling areas for evacuating heat. Not only the cooling area is increased but the distance to the centre portion of the winding parts at the inner side of the core and a cooling area is relatively small.

Moreover also parts of the inner side of the tubular stator core are cooled so that the cooling of the core is also improved and thereby also the possibility to cool the windings through the core is increased.

Preferably, the windings have the shape of thin discs.

The smaller the discs the greater the greater the possible number of discs and the greater the number of disks, the greater the cooling.

The discs are normally oblong, and at their ends they are preferably rounded.

The invention also relates to an electric motor or generator comprising a rotor, a stator around the rotor and a casing surrounding the stator, wherein the stator is according to either one of the above mentioned embodiments and comprises a tubular core and windings surrounding the core wall and thus traversed in their centre by the core, said windings extending axially and radially with respect to the axis of the core and are, as well on the outside as on the inside of the core for at least 95%, but preferably completely, spaced apart.

The motor or generator may comprise means for cooling, in which case these means comprise cooling fluid in the spaces between the windings as well on the inside as on the outside with respect of the core.

The casing may be separated in two separated spaces by means of a tube surrounding the rotor, the space on the outside of this tube comprising the insulated windings and being filled with a cooling medium, for example cooling oil.

In another embodiment, the casing may be provided with an inlet and an outlet for cooling medium, the cooling means comprising means for forcing cooling medium through the inlet inside the casing , along the windings and through the outlet outside the casing.

The invention will now be described by way of example and with reference to the accompanying drawings, in which:
Figure 1 represents an axial section of an electric motor provided with a stator, according to the invention;
Figure 2 is a top view of the stator from the motor of figure 1;
Figure 3 is an end view of the stator of figure 2;
Figure 4 is a perspective view of the stator of figures 2 and 3;
Figure 5 represents an axial section similar to the one of figure 1, but relating to another embodiment of the motor.

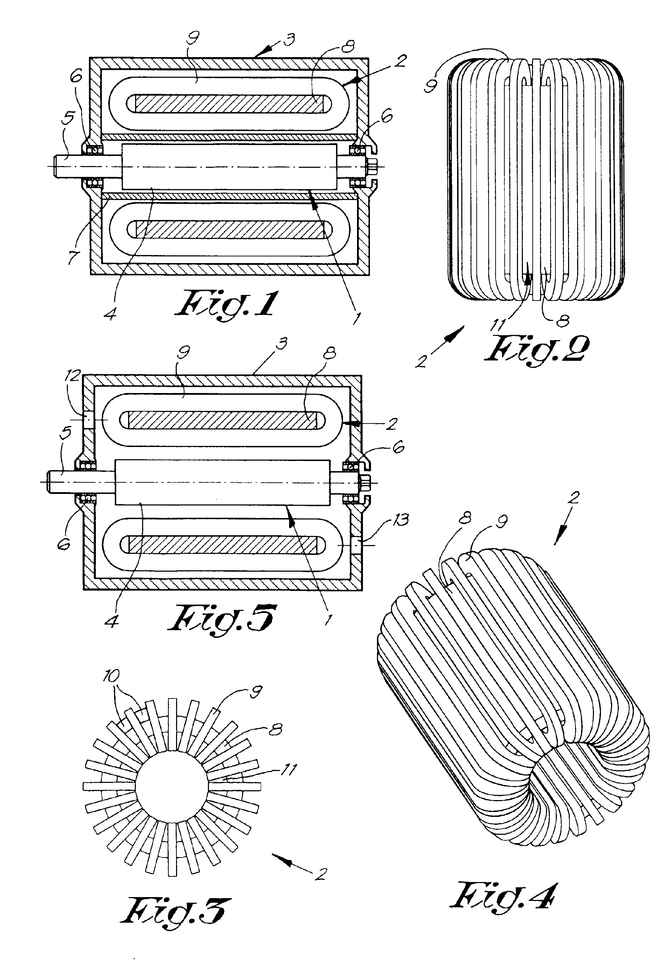

The motor shown in figure 1 is an electric motor, comprising essentially a rotor 1, a stator 2 surrounding the rotor 1 and a casing 3 surrounding the stator 2.

The casing 3 is approximately cylindrical with closed ends and the rotor 1 contains a rotor body 4 mounted on a shaft 5 which is journaled in these closed ends by means of bearings 6.

The rotor 1 is surrounded by a tubular separation wall 7, separating the rotor 1 from the stator 2.

The stator 2 has a tubular core 8 and is provided with a number of stator windings 9 surrounding the wall of the core 8 and consequently traversed in their centre by core 8 and extending in axial and radial direction with respect to the longitudinal axis of the core 8 which axis coincides with the rotation axis of the rotor 1.

As shown in detail in figures 2 to 4, these windings 9 have the shape of thin discs, having in the example given a constant thickness.

The discs fan out like the rays of a star, and are oblong in the direction of the axis of the rotor 1 with rounded ends.

Each disc forming winding 9 is provided with an axial slot for the core 8. Part of each disc is situated in the air gap between the rotor 1 and the tubular wall 7 and part in the air gap between the core 8 and the casing 3.

The windings 9 may be made from bundles of wires or strands surrounding the core 8 or from a single wire, for instance a Litz wire.

The different layers of this wire or these wires or strands in a winding 9 may be hold together by means of an insulating varnish.

In an extreme embodiment, the discs may be solid conductors, particularly copper rings.

The windings 9 may be hold into place by means of supports 10. These supports may be insulating pieces fixed to the core 8. Only two such supports 10 are schematically shown in figure 3, but it is clear that such support 10 is present between each pair of adjacent disc forming windings 9.

It is important that also on the inside of the core 8 there is a gap 11 between two adjacent disc shaped windings 9, at least over an important radial distance, more particularly over at least 95%, and preferably over the complete radial dimension of the discs as shown in the figures 1 to 4.

The electrical connection of the windings 9 with the outside of the stator 2 is obvious for the skilled art worker and is for the sake of simplicity neither described nor shown in the drawings.

The conductors or wires forming several discs may be electrically connected to each other. When the discs are formed by windings, a same wire can extend from one disc 9 to the other and form the windings for several discs 9.

The space between the tubular wall 7 and the casing 3 and consequently also the spaces between the disc-shaped windings 9 are filled with a cooling medium.

This cooling medium is preferably a liquid such as transformer oil. This liquid may be stationary of may be circulating, in which case the casing 3 may be provided with an inlet and an outlet an means for forcing cooling liquid through the inlet, along the windings 9 and through the outlet.

This cooling medium may be a gas such as air, forced over the windings 9, in which case the tubular wall 7 is not necessary.

The form of embodiment of the motor shown in figure 5 differs from the embodiment of figure 1 by the absence of the tube 7 and the fact that the casing 3 is provided with an inlet 12 and an outlet 13 on opposite sides.

Cooling gas may be forced through the casing 3 and the inlet 12 may be connected to means for forcing said gas, for example a blower.

In all described embodiments, the disc-like shape of the windings 9 positioned in a star-disposition has as an excellent cooling as a result. Especially on the ends of the windings, heat may be dissipated more efficiently than with a conventional design.

When a cooling medium is present, there is a long contact distance between the cooling medium and the windings 9 on both sides of the core 8 and also a contact of the cooling medium with the inner side of the core 8.

Also on the inner side of the core 8, the sides of the windings 9 form cooling areas.

## Claims

1. Stator for an electric motor or generator, said stator (2) comprising a tubular core (8) and windings surrounding the core wall and thus traversed in their centre by the core, said windings extending axially and radially with respect to the axis of the core.(8),characterised in that as well on the inside as on the outside of the core (8) the windings are for at least 95% spaced apart.

2. Stator according to claim 1, characterised in that the windings are completely spaced apart.

3. Stator according to claim 1 or 2, characterised in that the windings 9 have the shape of thin discs.

4. Stator according to claim 3,characterised in that the discs have a constant thickness.

5. Stator according to claim 3 or 4, characterised in that the discs are oblong, and at their ends they are rounded.

6. Stator according to either one of claims 1 to 5, characterised in that it comprises supports (10) for the holding into place the windings.

7. Electric motor or generator comprising a rotor (1), a stator (2) around the rotor (1) and a casing (3) surrounding the stator (2), characterised in that the stator (2) is according to either one of claims 1 to 6 and comprises a tubular core (8) and windings (9) surrounding the core wall and thus traversed in their centre by the core (8), said windings (9) extending axially and radially with respect to the axis of the core (8) and are, as well on the outside as on the inside of the core (7) for at least 95% spaced apart.

8. Electric motor or generator according to claim 7, characterised in that the windings (9) are completely spaced apart.

9. Electric motor or generator according to claim 7 or 8, characterised in that it comprises means for cooling comprising cooling fluid in the spaces (11) between the windings (9) as well on the inside as on the outside with respect of the core (8).

10. Electric motor or generator according to claim 9, characterised in that the casing (3) is separated in two separated spaces by means of a tube (7) surrounding the rotor, the space on the outside of this tube (7) comprising the insulated windings and being filled with a cooling medium, for example cooling oil.

11. Electric motor or generator according to claim 8 or 9, characterised in that the casing (3) is provided with an inlet (12) and an outlet (13) for cooling medium, the cooling means comprising means for forcing cooling medium through the inlet (12) inside the casing (3), along the windings and through the outlet (13) outside the casing (3).
